# EUROPEAN PATENT APPLICATION

(11) **EP 4 667 825 A1**
(43) Date of publication of application: **24.12.2025**
(21) Application number: 25175545.0
(22) Date of filing: 09.05.2025
(51) Int. Cl.: F23R 3/14, F23R 3/28

(54) **GAS TURBINE ENGINE AND FUEL NOZZLE ASSEMBLY THEREFOR**

(30) Priority: 20.06.2024 US 202418748534
(71) Applicant: General Electric Company, Cincinnati, Ohio 45215 (US)
(72) Inventor: NAIK, Pradeep, 560066 Bengaluru (IN); SHEALY, James, West Chester, 45069 (US); BUCARO, Michael, Cincinnati, 45215-6301 (US); PET T, Prithiviraaj, 560066 Bengaluru (IN); SAMPATH, Karthikeyan, 560066 Bengaluru (IN); BADHUK, Pabitra, 560066 Bengaluru (IN); CHAKRABORTY, Aritra, 560066 Bengaluru (IN); BENJAMIN, Michael, Evendale, 45241 (US)
(74) Representative: Openshaw & Co.

(57) **Abstract**

A gas turbine engine (10), comprising: a compressor section (12), a combustion section (14), and a turbine section (16) in serial flow arrangement, with the combustion section (14) comprising: a combustor (30) liner that at least partially defines a combustion chamber (50); and a gaseous fuel nozzle assembly (48) fluidly coupled with the combustion chamber (50), the gaseous fuel nozzle assembly (48) comprising a fuel-air mixer (100, 200), a gaseous fuel passage (110, 210) fluidly coupled with the fuel-air mixer (100, 200), and an air passage (112, 212) fluidly coupled with the fuel-air mixer (100, 200); wherein the fuel-air mixer (100, 200) includes a plurality of vanes (130, 230, 231); wherein at least one vane of the plurality of vanes (130, 230, 231) is disposed at least partially at an angle (160) relative to an axial direction; and wherein the angle (160) varies in a radial direction.

## Description

### TECHNICAL FIELD

The present subject matter relates generally to a gas turbine engine having a fuel nozzle assembly.

### BACKGROUND

Turbine engines are driven by a flow of combustion gases passing through the engine to rotate a multitude of turbine blades, which, in turn, rotate a compressor to provide compressed air to the combustor for combustion. A combustor can be provided within the turbine engine and is fluidly coupled with a turbine into which the combusted gases flow.

Historically, hydrocarbon fuels are used in the combustor of a turbine engine. Generally, air and fuel are fed to a combustion chamber, the air and fuel are mixed, and then the fuel is burned in the presence of the air to produce hot gas. The hot gas is then fed to a turbine where it cools and expands to produce power. By-products of the fuel combustion typically include environmentally unwanted byproducts, such as nitrogen oxide and nitrogen dioxide (collectively called NOₓ), carbon monoxide (CO), unburned hydrocarbons (UHC) (e.g., methane and volatile organic compounds that contribute to the formation of atmospheric ozone), and other oxides, including oxides of sulfur (e.g., SO₂ and SO₃).

To reduce the environmentally unwanted byproducts, other fuels, such as hydrogen, are being explored. Hydrogen or hydrogen mixed with another element has a higher flame temperature than traditional hydrocarbon fuels. That is, hydrogen or a hydrogen mixed fuel typically has a wider flammable range and a faster burning velocity than traditional hydrocarbon-based fuels.

### BRIEF DESCRIPTION OF THE DRAWINGS

In the drawings:
FIG. 1 is a schematic view of a gas turbine engine having a compression section, a combustion section, and a turbine section in accordance with various aspects described herein.
FIG. 2 is a schematic view of the combustion section of FIG. 1 along line II-II in accordance with various aspects described herein.
FIG. 3 is a schematic cross-sectional view illustrating portions of a fuel nozzle assembly coupled to a combustion chamber in accordance with various aspects described herein.
FIG. 4 is a schematic view illustrating portions of a fuel-air mixer viewed from aft in accordance with various aspects described herein.
FIG. 5A is a cross-sectional view illustrating a vane of a fuel-air mixer in accordance with various aspects described herein.
FIG. 5B is a cross-sectional view illustrating a vane of a fuel-air mixer in accordance with various aspects described herein.
FIG. 6A is a schematic cross-sectional view illustrating portions of a fuel nozzle assembly in accordance with various aspects described herein.
FIG. 6B is a schematic view illustrating portions of a fuel-air mixer viewed from aft in accordance with various aspects described herein.
FIG. 6C is a perspective view illustrating portions of a vane with fuel posts in accordance with various aspects described herein.
FIG. 7 is a schematic cross-sectional view illustrating portions of a fuel nozzle assembly coupled to a combustion chamber in accordance with various aspects described herein.
FIG. 8A is a cross-sectional view illustrating an intermediate wall of a fuel-air mixer in accordance with various aspects described herein.
FIG. 8B is a cross-sectional view illustrating an intermediate wall of a fuel-air mixer in accordance with various aspects described herein.
FIG. 8C is a cross-sectional view illustrating an intermediate wall of a fuel-air mixer in accordance with various aspects described herein.
FIG. 9 is a schematic view illustrating portions of a fuel-air mixer viewed from aft in accordance with various aspects described herein.
FIG. 10 is a schematic cross-sectional view illustrating portions of a fuel nozzle assembly in accordance with various aspects described herein.
FIG. 11A is a cross-sectional view illustrating portions of an intermediate wall of a fuel-air mixer in accordance with various aspects described herein.
FIG. 11B is a cross-sectional view illustrating portions of an intermediate wall of a fuel-air mixer in accordance with various aspects described herein.
FIG. 11C is a cross-sectional view illustrating portions of an intermediate wall of a fuel-air mixer in accordance with various aspects described herein.
FIG. 12 is a schematic cross-sectional view illustrating portions of a fuel nozzle assembly in accordance with various aspects described herein.
FIG. 13 is a schematic cross-sectional view illustrating portions of a fuel nozzle assembly in accordance with various aspects described herein.
FIG. 14 is a schematic cross-sectional view illustrating portions of a fuel nozzle assembly in accordance with various aspects described herein.

### DETAILED DESCRIPTION

Aspects of the disclosure described herein are directed to a combustor and a fuel nozzle assembly for a combustor. With some aspects, the disclosed combustors and fuel nozzle assemblies can be utilized with gaseous fuel, such as hydrogen. Gaseous fuel, including hydrogen, spreads/disperses at a faster rate than atomized liquid fuel, which can involve less mixing time for the gaseous fuel, fuel mixing tube lengths can be shorter, and the flame from the gaseous fuel may be more likely to spread farther and faster, which can increase the risk of flashback and flameholding (e.g., in a nozzle or mixer), and increase the impact of controlling the flame and limiting flame spread by controlling the dispersion of the gaseous fuel.

An inward cone present between outer vanes and an inner vanes can accelerate flow in the center of the mixer to push the forward stagnation point and the flame out of the mixer outlet. Vanes with axial or nearly axial vane angles at an inner wall can increase axial momentum of fluid proximate the centerline of the mixer to push the flame away from the mixer outlet, and increase the axial velocity of fluid in the center of the mixer to push the recirculation zone away from the mixer outlet. Vanes can be angled to provide a higher tangential velocity component to improve mixing of fuel and air. Fuel can be injected from the conical intermediate wall in the axial direction. The fuel may remain near the outer surface of the conical intermediate wall and get mixed post mixing of inner and outer vane flow with inward flow momentum.

Outer radial sections of vanes at or near the outer wall can provide a higher axial velocity component to the fluid at the outer wall to avoid flashback and flameholding on the outer wall. Inner radial sections of the vanes at or near the outer wall having a higher tangential velocity component can improve mixing of fuel and air.

Inward flow momentum from a conical intermediate wall helps to keep fuel in the center of the mixer and away from the outer wall of the mixer. Inward flow on the conical surface from both sides with lobes at the tip helps to increase turbulence and mixing of fuel and air. Radial vane sections at or near the centerline can be axial to help achieve higher axial momentum at the center of the mixer that keeps the flame aft of the mixer outlet. Radial vane sections at or near the outer wall can be axial to achieve higher velocity close to mixer outer wall to keep flames away from the outer wall.

While described with respect to a turbine engine, it should be appreciated that the combustor as described herein can be for any engine having a combustor. It should be appreciated that application of aspects of the disclosure discussed herein are applicable to engines with propeller sections or fan and booster sections along with turbojets and turbo engines as well.

For purposes of illustration, the present disclosure will be described with respect to a turbine engine. It will be understood, however, that aspects of the disclosure described herein are not so limited. A combustor as described herein can be implemented in various engines, including but not limited to turbojet, turboprop, turboshaft, and turbofan engines. Aspects of the disclosure discussed herein may have general applicability within non-aircraft engines having a combustor, such as other mobile applications and non-mobile industrial, commercial, and residential applications.

With the combustors and fuel nozzle assemblies described herein, hydrogen fuel can be used without the need of diluents. In some embodiments, no diluent is added to the combustion chamber and the fuel is substantially completely diatomic hydrogen without diluent. As used herein, the term "substantially completely," as used to describe the amount of a particular element or molecule (e.g., diatomic hydrogen), refers to at least 99% by mass of the described portion of the element or molecule, such as at least 97.5%, such as at least 95%, such as at least 92.5%, such as at least 90%, such as at least 85%, or such as at least 75% by mass of the described portion of the element or molecule. In some examples, the fuel is entirely (e.g., 100%) hydrogen by mass.

The word "exemplary" is used herein to mean "serving as an example, instance, or illustration." Any implementation described herein as "exemplary" is not necessarily to be construed as preferred or advantageous over other implementations. Additionally, unless specifically identified otherwise, all embodiments described herein should be considered exemplary.

As used herein, the terms "first", "second", "third", etc. may be used interchangeably to distinguish one component from another and are not intended to signify location or importance of the individual components.

The terms "forward" and "aft" refer to relative positions within a gas turbine engine or vehicle, and refer to the normal operational attitude of the gas turbine engine or vehicle. For example, with regard to a gas turbine engine, forward refers to a position closer to an engine inlet and aft refers to a position closer to an engine exhaust.

As used herein, the term "upstream" refers to a direction that is opposite the fluid flow direction, and the term "downstream" refers to a direction that is in the same direction as the fluid flow. The term "fore" or "forward" means in front of something and "aft" or "rearward" means behind something. For example, when used in terms of fluid flow, fore/forward can mean upstream and aft/rearward can mean downstream.

The term "fluid" may be a gas or a liquid. The term "fluidly coupled" means that a fluid is capable of making the connection between the areas specified.

The term "nozzle" has been used in various ways in the context of gas turbine engines. In the instant application, "nozzle" refers to a component having a portion for fluid coupling to a fuel supply and having at least one portion for fluidly coupling with a combustor portion, a combustor liner, a combustion chamber, or combinations thereof.

Additionally, as used herein, the terms "radial" or "radially" refer to a direction away from a common center. For example, in the overall context of a turbine engine, radial refers to a direction along a ray extending between a center longitudinal axis of the engine and an outer engine circumference.

All directional references (e.g., radial, axial, proximal, distal, upper, lower, upward, downward, left, right, lateral, front, back, top, bottom, above, below, vertical, horizontal, clockwise, counterclockwise, upstream, downstream, forward, aft, etc.) are only used for identification purposes to aid the reader's understanding of the present disclosure, and do not create limitations, particularly as to the position, orientation, or use of aspects of the disclosure described herein. Connection references (e.g., attached, coupled, connected, and joined) are to be construed broadly and can include intermediate structural elements between a collection of elements and relative movement between elements unless otherwise indicated. As such, connection references do not necessarily infer that two elements are directly connected and in fixed relation to one another. The exemplary drawings are for purposes of illustration only the dimensions, positions, order, and relative sizes reflected in the drawings attached hereto can vary.

The singular forms "a", "an", and "the" include plural references unless the context clearly dictates otherwise. Furthermore, as used herein, the term "set" or a "set" of elements can be any number of elements, including only one.

Uses of "and" and "or" are to be construed broadly. For example and without limitation, uses of "and" do not necessarily require all elements or features listed, and uses of "or" are inclusive unless such a construction would be illogical.

Approximating language, as used herein throughout the specification and claims, is applied to modify any quantitative representation that could permissibly vary without resulting in a change in the basic function to which it is related. Accordingly, a value modified by a term or terms, such as "about", "approximately", "generally", and "substantially", are not to be limited to the precise value specified. In at least some instances, the approximating language may correspond to the precision of an instrument for measuring the value, or the precision of the methods or machines for constructing or manufacturing the components and systems. In at least some instances, the approximating language may correspond to the precision of an instrument for measuring the value, or the precision of the methods or machines for constructing or manufacturing the components and systems. For example, the approximating language may refer to being within a 1, 2, 4, 5, 10, 15, or 20 percent margin in either individual values, range(s) of values and endpoints defining range(s) of values. Here and throughout the specification and claims, range limitations are combined and interchanged, such ranges are identified and include all the sub-ranges contained therein unless context or language indicates otherwise. For example, all ranges disclosed herein are inclusive of the endpoints, and the endpoints are independently combinable with each other.

"Proximate" as used herein is a descriptor for locating parts described herein. Further, the term "proximate" means nearer or closer to the part recited than the following part. For example, a first aperture proximate a wall, the first aperture located upstream from a second aperture means that the first aperture is closer to the wall than the first aperture is to the second aperture.

Additionally, as used herein, a "controller" can include a component configured or adapted to provide instruction, control, operation, or any form of communication for operable components to effect the operation thereof. A controller can include any known processor, microcontroller, or logic device, including, but not limited to: field programmable gate arrays (FPGA), an application specific integrated circuit (ASIC), a full authority digital engine control (FADEC), a proportional controller (P), a proportional integral controller (PI), a proportional derivative controller (PD), a proportional integral derivative controller (PID controller), proportional resonant controller (PR), a hardware-accelerated logic controller (e.g. for encoding, decoding, transcoding, etc.), the like, or a combination thereof. Non-limiting examples of a controller can be configured or adapted to run, operate, or otherwise execute program code to effect operational or functional outcomes, including carrying out various methods, functionality, processing tasks, calculations, comparisons, sensing or measuring of values, or the like, to enable or achieve the technical operations or operations described herein. The operation or functional outcomes can be based on one or more inputs, stored data values, sensed or measured values, true or false indications, or the like. While "program code" is described, non-limiting examples of operable or executable instruction sets can include routines, programs, objects, components, data structures, algorithms, etc., that have the technical effect of performing particular tasks or implement particular abstract data types. In another non-limiting example, a controller can also include a data storage component accessible by the processor, including memory, whether transient, volatile or non-transient, or non-volatile memory.

Additional non-limiting examples of the memory can include Random Access Memory (RAM), Read-Only Memory (ROM), flash memory, or one or more different types of portable electronic memory, such as discs, DVDs, CD-ROMs, flash drives, universal serial bus (USB) drives, the like, or any suitable combination of these types of memory. In one example, the program code can be stored within the memory in a machine-readable format accessible by the processor. Additionally, the memory can store various data, data types, sensed or measured data values, inputs, generated or processed data, or the like, accessible by the processor in providing instruction, control, or operation to effect a functional or operable outcome, as described herein. In another non-limiting example, a controller can be configured for comparing a first value with a second value, and operating and controlling operations of additional components based on the satisfying of that comparison. For example, when a sensed, measured, or provided value is compared with another value, including a stored or predetermined value, the satisfaction of that comparison can result in actions, functions, or operations controllable by the controller.

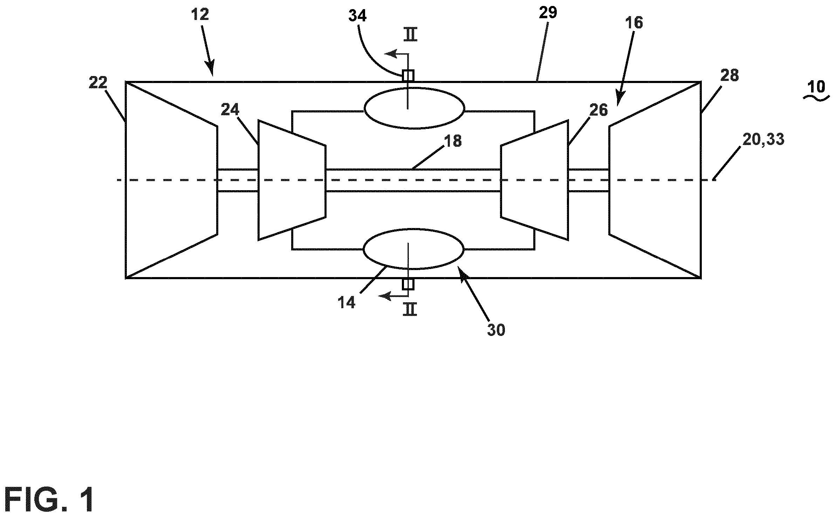

FIG. 1 is a schematic view of a turbine engine 10. As a non-limiting example, the turbine engine 10 can be used within an aircraft. The turbine engine 10 can include, at least, a compressor section 12, a combustion section 14, and a turbine section 16. A drive shaft 18 rotationally couples the compressor section 12 and turbine section 16, such that rotation of one affects the rotation of the other, and defines a rotational axis 20 for the turbine engine 10.

The compressor section 12 can include a low-pressure (LP) compressor 22, and a highpressure (HP) compressor 24 serially fluidly coupled to one another. The turbine section 16 can include an HP turbine 26, and an LP turbine 28 serially fluidly coupled to one another. The drive shaft 18 can operatively couple the LP compressor 22, the HP compressor 24, the HP turbine 26 and the LP turbine 28 together. Alternatively, the drive shaft 18 can include an LP drive shaft (not illustrated) and an HP drive shaft (not illustrated). The LP drive shaft can couple the LP compressor 22 to the LP turbine 28, and the HP drive shaft can couple the HP compressor 24 to the HP turbine 26. An LP spool can be defined as the combination of the LP compressor 22, the LP turbine 28, and the LP drive shaft such that the rotation of the LP turbine 28 can apply a driving force to the LP drive shaft, which in turn can rotate the LP compressor 22. An HP spool can be defined as the combination of the HP compressor 24, the HP turbine 26, and the HP drive shaft such that the rotation of the HP turbine 26 can apply a driving force to the HP drive shaft which in turn can rotate the HP compressor 24.

The compressor section 12 can include a plurality of axially spaced stages. Each stage includes a set of circumferentially-spaced rotating blades and a set of circumferentially-spaced stationary vanes. The compressor blades for a stage of the compressor section 12 can be mounted to a disk, which is mounted to the drive shaft 18. Each set of blades for a given stage can have its own disk. The vanes of the compressor section 12 can be mounted to a casing which can extend circumferentially about and enshroud one or more sections of the turbine engine 10. It will be appreciated that the representation of the compressor section 12 is merely schematic and that there can be any number of blades, vanes and stages. Further, it is contemplated that there can be any number of other components within the compressor section 12.

Similar to the compressor section 12, the turbine section 16 can include a plurality of axially spaced stages, with each stage having a set of circumferentially-spaced, rotating blades and a set of circumferentially-spaced, stationary vanes. The turbine blades for a stage of the turbine section 16 can be mounted to a disk which is mounted to the drive shaft 18. Each set of blades for a given stage can have its own disk. The vanes of the turbine section 16 can be mounted to the casing in a circumferential manner. It is noted that there can be any number of blades, vanes and turbine stages as the illustrated turbine section 16 is merely a schematic representation. Further, it is contemplated that there can be any number of other components within the turbine section 16.

The combustion section 14 can be provided serially between the compressor section 12 and the turbine section 16. The combustion section 14 can be fluidly coupled to at least a portion of the compressor section 12 and the turbine section 16 such that the combustion section 14 at least partially fluidly couples the compressor section 12 to the turbine section 16. As a non-limiting example, the combustion section 14 can be fluidly coupled to the HP compressor 24 at an upstream end of the combustion section 14 and to the HP turbine 26 at a downstream end of the combustion section 14. The combustion section 14 can include a combustor 30 fluidly coupled to a fuel source 34.

During operation of the turbine engine 10, ambient or atmospheric air is drawn into the compressor section 12 via a fan (not illustrated) upstream of the compressor section 12, where the air is compressed defining a pressurized air. The pressurized air can then flow into the combustion section 14 where the pressurized air is mixed with fuel and ignited, thereby generating combustion gases. Some work is extracted from these combustion gases by the HP turbine 26, which drives the HP compressor 24. The combustion gases are discharged into the LP turbine 28, which extracts additional work to drive the LP compressor 22, and the exhaust gas is ultimately discharged from the turbine engine 10 via an exhaust section (not illustrated) downstream of the turbine section 16. The driving of the LP turbine 28 drives the LP spool to rotate the fan (not illustrated) and the LP compressor 22. The pressurized airflow and the combustion gases can together define a working airflow that flows through the fan, compressor section 12, combustion section 14, and turbine section 16 of the turbine engine 10.

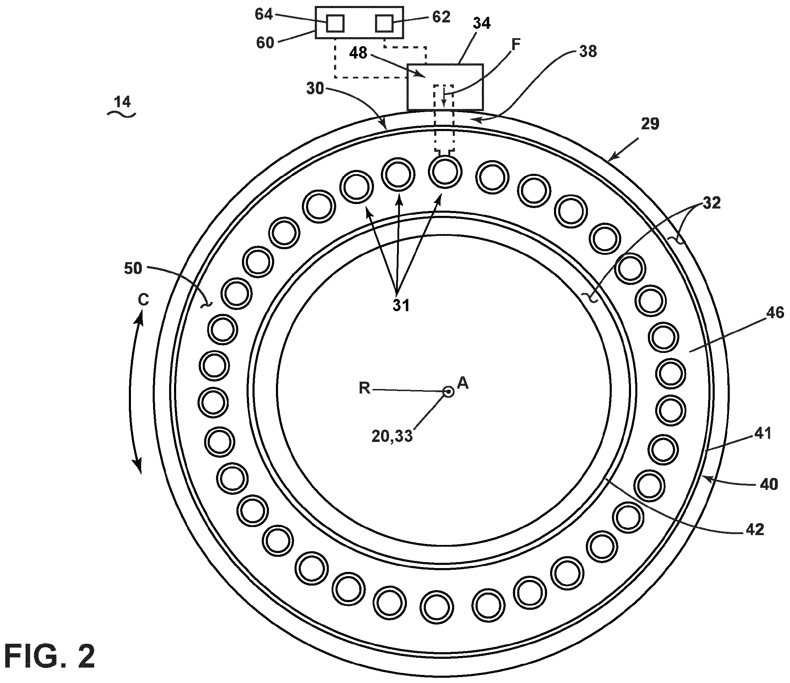

FIG. 2 depicts a cross-sectional view of the combustion section 14 along line II-II of FIG. 1. The combustion section 14 can include a combustor 30 with an annular arrangement of combustor portions 31 disposed around the centerline or rotational axis 20 of the turbine engine 10 (e.g., circumferentially spaced from each other in an annular configuration) (FIG. 1). The combustor portions 31 can, in some configurations, include or be configured as combustor cups, fuel cups, or nozzle cups. A fuel nozzle assembly 48 can be connected to each combustor portion 31. The combustor 30 can have a can, can-annular, or annular arrangement depending on the type of engine in which the combustor 30 is located. In a non-limiting example, the combustor 30 can have a combination arrangement located with a shroud or casing 29 of the turbine engine 10. The shroud or casing 29 can enshroud or cover at least a portion of the combustion section 14.

The combustor 30 can be at least partially defined by a combustor liner 40. In some examples, the combustor liner 40 can include an outer liner 41 and an inner liner 42 concentric with respect to each other and arranged in an annular fashion about the engine centerline or rotational axis 20. In some examples, the combustor liner 40 can have an annular structure about the combustor 30. In some examples, the combustor liner 40 can include multiple segments or portions collectively forming the combustor liner 40. In some examples, the combustor liner 40 can have an annular structure about the combustor 30. In some examples, the combustor liner 40 can include multiple segments or portions collectively forming the combustor liner 40. In some examples, the combustor liner 40 can include the outer liner 41 radially spaced from the inner liner 42. In some examples, the combustor liner 40 can include a single liner.

The combustor liner 40 can at least partially define a combustion chamber 50 arranged annularly about the rotational axis 20. For example, a dome wall 46 may be substantially perpendicular to the rotational axis 20 and can cooperate with the outer liner 41, the inner liner 42, or both, to at least partially define the combustion chamber 50. A compressed air passage 32 can be defined at least in part by both the combustor liner 40 and the casing 29.

The combustor 30 can include or be fluidly coupled to the fuel source 34 (e.g., an external fuel manifold). The fuel nozzle assembly 48 fluidly couples the fuel source 34 with the combustor portions 31 and the combustion chamber 50. The fuel nozzle assembly 48 can include a fuel nozzle body 38 and at least a portion of the dome wall 46. A fuel F can include any suitable fuel, including gaseous fuel, such as hydrogen fuel, in non-limiting examples, which can include 100% H₂ (e.g., without a diluent). For example, the fuel nozzle assembly 48 can be a gaseous fuel nozzle assembly, such as a gaseous hydrogen fuel nozzle assembly. The combustor portions 31 can be separately connected to the dome wall 46. For example and without limitation, the combustor portions 31 can be connected to the dome wall 46 in a circumferentially spaced configuration. The combustor portions 31 can be disposed at a radial distance from the rotational axis 20 that is greater than a radial distance of the inner liner 42 and less than a radial distance of the outer liner 41. A controller 60 can be connected to and at least partially control operation of the fuel source 34, the fuel nozzle assembly 48, or both. The controller 60 can include a processor 62 and a memory 64. A centerline 33 of the combustion section 14 can be concentric with the rotational axis 20. The centerline 33 can define a radial direction R, an axial direction A, and a circumferential direction C.

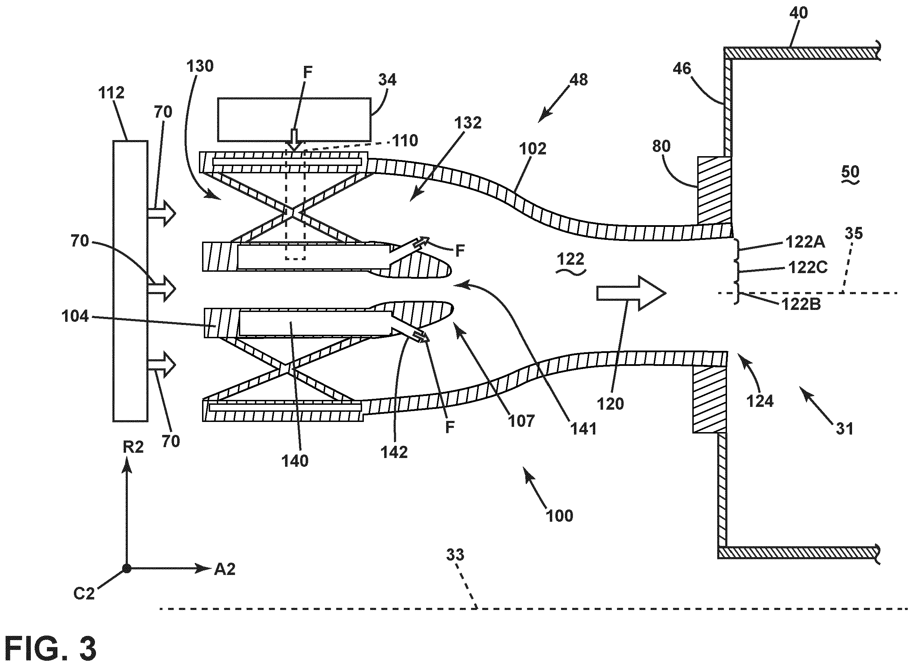

FIG. 3 is a schematic view of an example of one of the combustor portions 31, which can be provided, at least in part, by the fuel nozzle assembly 48. The fuel nozzle assembly 48 can include a wall 80 coupled, at least indirectly, with the combustor liner 40. The wall 80 can at least partially define the dome wall 46. For example, the fuel nozzle assembly 48 can provide at least a portion of the dome wall 46. The fuel nozzle assembly 48 can include a centerline 35 that is parallel with and radially offset from the centerline 33. The centerline 35 can be concentric with a centerline of the combustor portion 31 to which the fuel nozzle assembly 48 is connected or incorporated with. The centerline 35 can define a second radial direction R2, a second axial direction A2, and a second circumferential direction C2. The second axial direction A2 can be parallel to the axial direction A (FIG. 2).

The fuel nozzle assembly 48 includes a mixer 100 (e.g., a fuel-air mixer) having an outer wall 102 and an inner wall 104 offset from (e.g., radially inward of) the outer wall 102, a fuel passage 110 (e.g., a gaseous fuel passage) fluidly coupled with the mixer 100, and an air passage 112 fluidly coupled with the mixer 100. The fuel passage 110 is fluidly coupled with the fuel source 34 to provide fuel F to the mixer 100. The air passage 112 is fluidly coupled with a source of air 70, such as the compressor section 12 (FIG. 1). The mixer 100 mixes fuel F and air 70 and provides a fuel-air output mixture 120 to the combustion chamber 50. The mixer 100 includes an outlet 124 fluidly coupled with the combustion chamber 50. The fuel passage 110 and the air passage 112 can include one or more of tubes, pipes, recesses, apertures, chambers, ducts, or combinations thereof, and can be formed separately from other components, integrally with (e.g., at least partially defined by) other components, or a combination thereof. For example, the fuel passage 110 can be configured as a gaseous fuel conduit comprising a combination of a separate fuel tube and a passage defined by the inner wall 104. The inner wall 104 can also define an inner wall air passage 141 centered on the centerline 35 and fluidly coupled with the air passage 112.

The mixer 100 can include a first set of vanes 130 (e.g., swirler vanes) disposed inside the outer wall 102 and outside the inner wall 104, such as in an annular space 132 defined between the outer wall 102 and the inner wall 104. The inner wall 104 includes an inner wall fuel passage 140 that is fluidly coupled to the fuel passage 110. The inner wall fuel passage 140 extends through at least a portion of the inner wall 104 to a set of inner wall fuel orifices 142. The set of inner wall fuel orifices 142 can comprise a single fuel orifice (e.g., an annular orifice) or a plurality of fuel orifices. The set of inner wall fuel orifices 142 can be directed in the same or different directions. In the example shown in FIG. 3, the set of inner wall fuel orifices 142 is an annular fuel orifice directed radially outward, at least to some degree, such that fuel F flows into the annular space 132, toward the outer wall 102, or both. Directing one or more inner wall fuel orifices of the set of inner wall fuel orifices 142 radially outward can facilitate mixing of the fuel F with air 70 having increased turbulence downstream of the first set of vanes 130, which can reduce NOₓ emissions.

The mixer 100 includes a premixing chamber 122 defined, at least in part, by the outer wall 102 aft of an aft end 107 of the inner wall 104. The premixing chamber 122 can extend axially from an axial position of the aft end 107 of the inner wall 104 to the combustion chamber 50. The outer wall 102 can converge radially inward as the outer wall 102 extends aft toward the combustion chamber 50, which can increase the velocity of fluid in the premixing chamber 122, such as the fuel-air output mixture 120. Increasing fluid velocity in the premixing chamber 122 can reduce flashback and flameholding. The premixing chamber 122 includes an outer region 122A, an inner region 122B (e.g., a core region or central region), and an intermediate region 122C. The inner region 122B is centered on the centerline 35 and extends radially outward to the intermediate region 122C. The outer region 122A extends from the outer wall 102 to the intermediate region 122C.

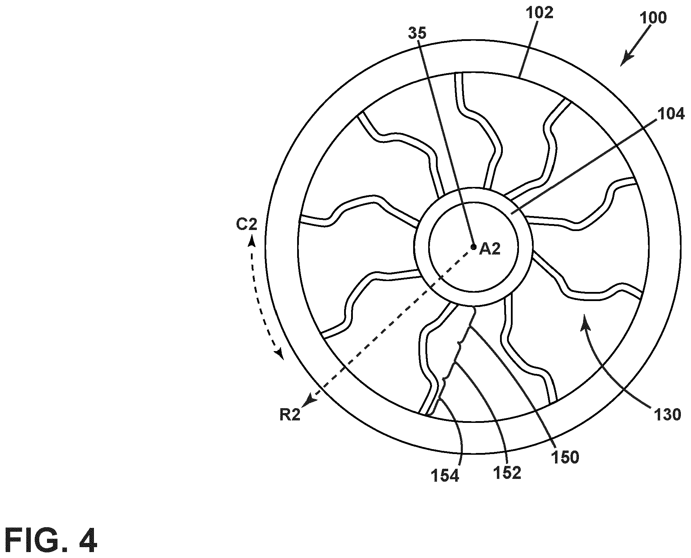

Referring to FIG. 4, the first set of vanes 130 of the mixer 100 can include a plurality of vanes each having a first radial section 150, a second radial section 152, and a third radial section 154. The first radial section 150 can extend radially outward (e.g., relative to the centerline 35) from the inner wall 104 to the second radial section 152, which can extend radially outward from the first radial section 150 to the third radial section 154. The third radial section 154 can extend radially outward from the second radial section 152 to the outer wall 102. The first radial section 150, the second radial section 152, the third radial section 154, or combinations thereof, can be angled at various angles relative to the second radial direction R2, which can include the first radial section 150, the second radial section 152, and the third radial section 154 having at least some segments that are not parallel with the second radial direction R2.

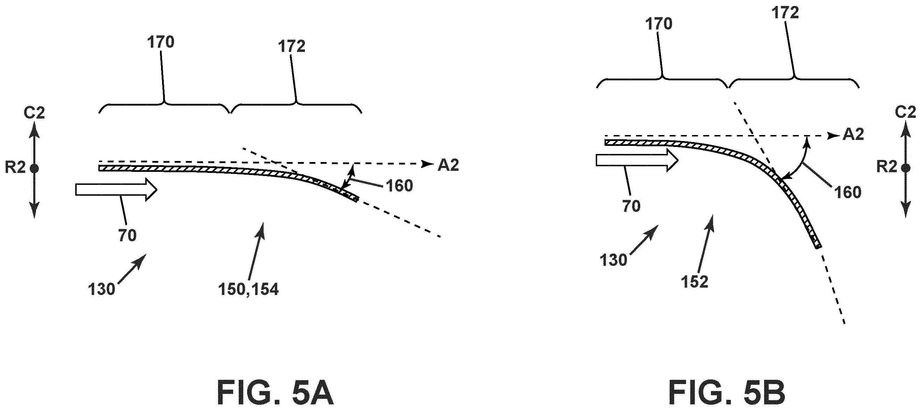

Referring to FIGS. 5A and 5B, the first set of vanes 130 can be at an angle 160 relative to the second axial direction A2, which can introduce or increase a tangential velocity of air 70 flowing through the first set of vanes 130. Increasing the tangential velocity of air 70 can facilitate mixing of air 70 with fuel F (FIG. 3), which can decrease NOₓ emissions. The angle 160 can vary along a vane of the first set of vanes 130 (e.g., in the second radial direction R2). The angle 160 can be the same for each of the first set of vanes 130 or can be different for different vanes of the first set of vanes 130. For example, the angle 160 can be in a first range of angles for the first radial section 150 (FIG. 5A), a second range of angles for the second radial section 152 (FIG. 5B), and a third range of angles for the third radial section 154 (FIG. 5A). The angle 160 can be larger for the second radial section 152 than for the first radial section 150 or the third radial section 154, such as introduce or increase the tangential velocity of air 70 flowing along the second radial section 152 to a greater extent than air 70 flowing along the first radial section 150 or the third radial section 154. For example, the first range of angles, the third range of angles, or both, can be 0 degrees to 40 degrees, inclusive of endpoints, and the second range of angles can be 40 degrees to 80 degrees, inclusive of endpoints. While the angle 160 is shown in FIG. 5A as greater than 0 degrees, the angle 160 can be zero degrees for the first radial section 150, the third radial section 154, or both, to maximize axial velocity of air 70, which can reduce flashback and flameholding. The angle 160 being zero degrees can, for example, include a first segment 170 of a vane of the first set of vanes 130 intersecting a second segment 172 of the vane at the same point without angular displacement between the first segment 170 and the second segment 172. The angle 160 can be the same or different for the first radial section 150 and the third radial section 154.

Providing the first radial section 150 and the third radial section 154 (e.g., the inner and outer radial sections, respectively) such that the angle 160 is smaller than in the second radial section 152 can increase or allow for relatively higher axial velocity of air 70 flowing along the first radial section 150 and the third radial section 154 as compared to the second radial section 152. Increased axial velocity of air 70 along the first radial section 150 increases axial velocity of air 70, fuel F (FIG. 3), or both in the inner region 122B (FIG. 3) of the premixing chamber 122 (FIG. 3), which can push a recirculation zone and flame away from (e.g., aft of) the outlet 124 (FIG. 3) of the mixer 100 (FIG. 3). Increased axial velocity of air 70 along the third radial section 154 increases axial velocity of air 70, fuel F (FIG. 3), or both at the outer region 122A (FIG. 3), which can prevent flashback at the outer wall 102 (FIG. 3). Increasing the tangential velocity of air 70 along the second radial section 152 increases the tangential velocity of air 70 and fuel F (FIG. 3) in an intermediate region 122C of the premixing chamber 122 (FIG. 3), which can increase mixing of air 70 and fuel F (FIG. 3) to reduce NOₓ emissions. For example, the second radial section 152 can facilitate a flow of the fuel-air output mixture 120 (FIG. 3) with a higher tangential fluid velocity radially between flows of the fuel-air output mixture 120 with higher axial velocities facilitated by the first radial section 150 and the third radial section 154. In some examples, the set of inner wall fuel orifices 142 (FIG. 3) are disposed to emit fuel F (FIG. 3) aft of the second radial section 152 of one or more of the first set of vanes 130 such that fuel F (FIG. 3) is emitted into air 70 having a higher turbulence, which can increase mixing of air 70 and fuel F (FIG. 3).

Referring still to FIGS. 5A and 5B, the first radial section 150, the second radial section 152, the third radial section 154, or combinations thereof, can include the first segment 170 and the second segment 172 disposed aft of the first segment 170. The first segment 170 can be parallel to the second axial direction A2, and the second segment 172 can be angled at the angle 160.

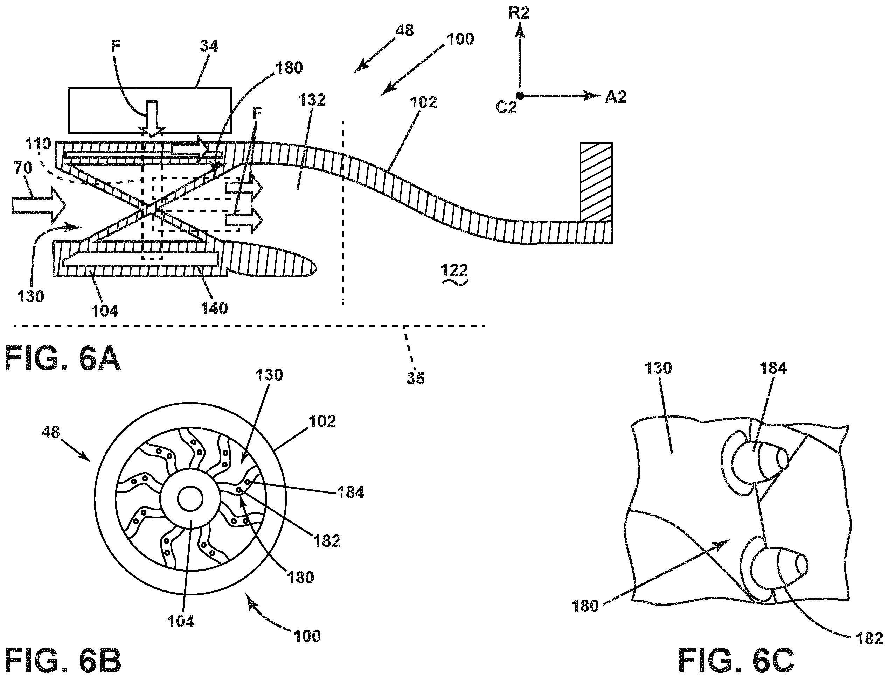

Referring to FIG. 6A, the mixer 100 of the fuel nozzle assembly 48 can include a set of fuel posts 180 fluidly coupled with the fuel passage 110 and configured to emit fuel F into the annular space 132, the premixing chamber 122, or both. The fuel posts 180 can be separate from the first set of vanes 130, can extend from the first set of vanes 130, or both. The fuel posts 180 being separating from the first set of vanes 130 can include the fuel passage 110 extending between (e.g., circumferentially) a pair of vanes of the first set of vanes 130 and the fuel posts 180 extending (e.g., directly) from the fuel passage 110. At least some of the set of fuel posts 180 can be aligned with the second radial section 152 (FIG. 4) such that the fuel F is emitted into air 70 with increased tangential velocity, which can provide uniform dispersal of fuel F in the second circumferential direction C2. The fuel passage 110 can be coupled with the fuel source 34 and can extend through the outer wall 102, through the first set of vanes 130, and into the inner wall 104 to fluidly couple with the inner wall fuel passage 140. Referring to FIG. 6B, the set of fuel posts 180 of the mixer 100 of the fuel nozzle assembly 48 can include a first fuel post 182 and a second fuel post 184 extending from some or each of the first set of vanes 130. The first fuel post 182 can be radially offset from the second fuel post 184 between the outer wall 102 and the inner wall 104. Referring to FIG. 6C, the set of fuel posts 180, such as the first fuel post 182 and the second fuel post 184, can extend aft from the first set of vanes 130.

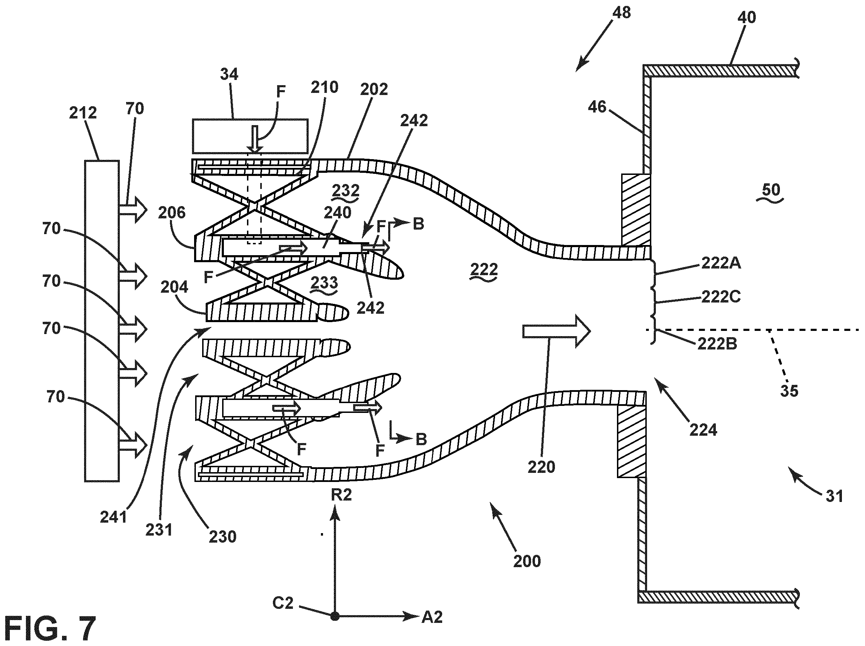

Referring to FIG. 7, a mixer 200 is illustrated that can be utilized for the fuel nozzle assembly 48 and the combustor portion 31 to provide a fuel-air output mixture 220. The mixer 200 can include aspects similar to those of the mixer 100; therefore, like parts will be described with like numerals further increased by 100, with it being understood that the description of the like parts of the mixer 100 can apply to the mixer 200, unless otherwise noted.

The mixer 200 is fluidly coupled with the combustion chamber 50 and is connected to the dome wall 46, the combustor liner 40, or both. The mixer 200 includes an outer wall 202, an inner wall 204, an intermediate wall 206, a fuel passage 210, an air passage 212, a premixing chamber 222, an outlet 224, a first set of vanes 230 (e.g., a set of outer vanes), and a second set of vanes 231 (e.g., a set of inner vanes). The inner wall 204 defines an inner wall air passage 241 centered on the centerline 35. The mixer 200 is centered with the centerline 35 of the combustor portion 31. The intermediate wall 206 can be disposed radially between the outer wall 202 and the inner wall 204 and can include an annular configuration such that a first annular space 232 is defined between the outer wall 202 and the intermediate wall 206, and a second annular space 233 is defined between the intermediate wall 206 and the inner wall 204. The intermediate wall 206 can function as a splitter to split at least some air 70 from the air passage 212 between the first annular space 232 and the second annular space 233. The intermediate wall 206 includes an intermediate wall fuel passage 240 that is fluidly coupled to the fuel passage 210. The intermediate wall fuel passage 240 extends through at least a portion of the intermediate wall 206 to a set of intermediate wall fuel orifices 242. The fuel passage 210 can extend through the outer wall 202, between a pair of the first set of vanes 230, to the intermediate wall 206, and to the intermediate wall fuel passage 240. The premixing chamber 222 includes an outer region 222A, an inner region 222B (e.g., a core or central region), and an intermediate region 222C. The inner region 222B is centered on the centerline 35 and extends radially outward to the intermediate region 222C. The outer region 222A extends from the outer wall 202 to the intermediate region 222C. The fuel passage 210 and the air passage 212 can include one or more of tubes, pipes, recesses, apertures, chambers, ducts, or combinations thereof, and can be formed separately from other components, integrally with (e.g., at least partially defined by) other components, or a combination thereof. For example, the fuel passage 210 can be configured as a gaseous fuel conduit comprising a combination of a separate fuel tube and a passage defined by the intermediate wall 206.

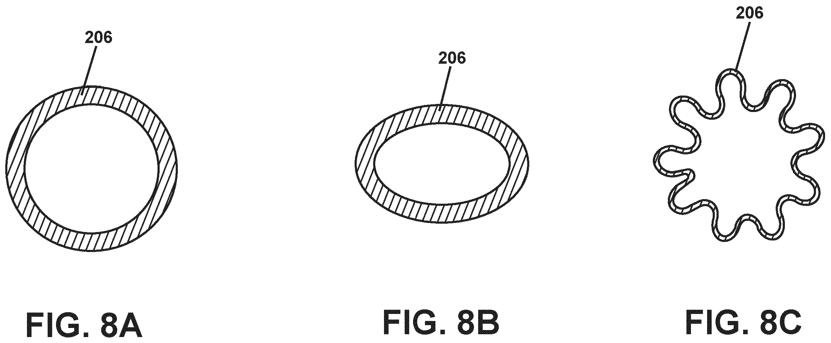

Referring to FIGS. 8A, 8B, and 8C, the intermediate wall 206 can include various cross-sectional shapes, such as at the line B-B in FIG. 7. For example, the cross-section shape can be circular (FIG. 8A), elliptical (FIG. 8B), lobed (FIG. 8C), or combinations thereof. The lobed shape can, for example, increase turbulence of air 70 (FIG. 7), which can improve mixing of air 70 (FIG. 7) and fuel F (FIG. 7) and can spread the flow of air 70 (FIG. 7) radially and laterally outward. Elliptical shapes can spread more flow toward the major axis compared to the minor axis. Circular shapes can allow for easier manufacturing.

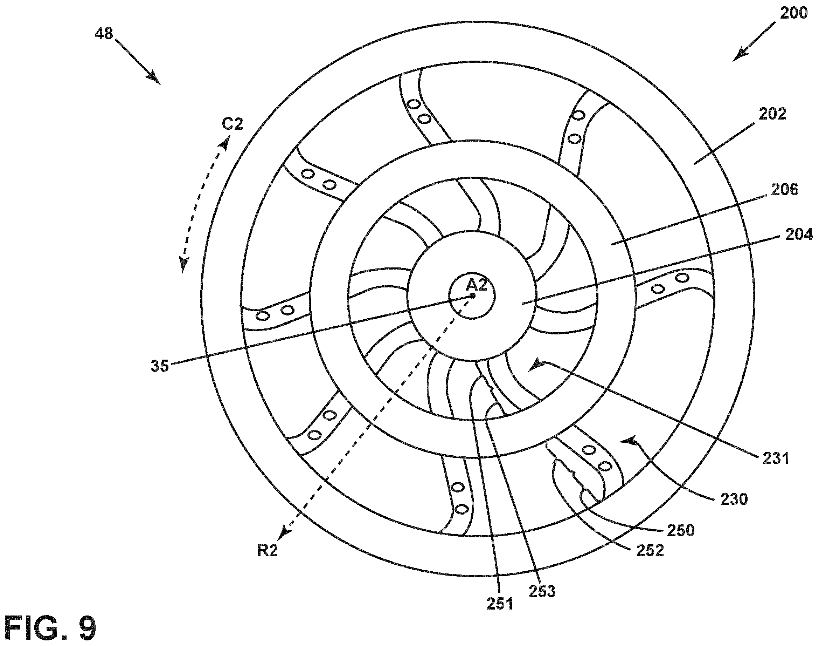

Referring to FIG. 9, the first set of vanes 230 of the mixer 200 of the fuel nozzle assembly 48 can extend between the intermediate wall 206 and the outer wall 202, and the second set of vanes 231 can extend between the intermediate wall 206 and the inner wall 204. The first set of vanes 230 can include a first radial section 250 and a second radial section 252. The first radial section 250 extends radially inward (relative to the centerline 35) from the outer wall 202 to the second radial section 252, which extends radially inward from the first radial section 250 to the intermediate wall 206 (e.g., the first radial section 250 is closer to the outer wall 202 than the second radial section 252). The first radial section 250 can be configured in the same or similar manner as the first radial section 150 (FIG. 5A) of the first set of vanes 130 (FIG. 5A) of the mixer 100 (FIG. 3), and the second radial section 252 can be configured in the same or similar manner as the second radial section 152 (FIG. 5A). For example, the first radial section 250 can be angled relative to the second axial direction A2 to a lesser extent than at least some portions of the second radial section 252. Such a configuration of the first radial section 250 can increase the axial velocity or maintain a relatively higher axial velocity of air 70 (FIG. 7) flowing along the first radial section 250, which can provide a higher axial velocity of air 70 (FIG. 7) flowing along the outer wall 202 to reduce flashback and flameholding. Additionally or alternatively, such a configuration of the second radial section 252 can increase the tangential velocity of air 70 (FIG. 7) flowing along the second radial section 252, which can increase mixing of air 70 (FIG. 7) and fuel F (FIG. 7).

The second set of vanes 231 can include a reversed configuration of the first set of vanes 230. The second set of vanes 231 can include a first radial section 251 that extends radially outward from the inner wall 204 to a second radial section 253 that extends radially outward from the first radial section 251 to the intermediate wall 206, with the second radial section 253 angled relative to the second axial direction A2 to a greater extent than the first radial section 251. For example, the first radial section 251 can be configured in the same or similar as the first radial section 150 (FIG. 5A) of the first set of vanes 130 (FIG. 5A) of the mixer 100 (FIG. 3) to increase axial velocity of air 70 (FIG. 7), and the second radial section 253 can be configured in the same or similar manner as the second radial section 152 (FIG. 5A) to increase tangential velocity of air 70 (FIG. 7).

The first set of vanes 230 and the second set of vanes 231 can be arranged such that sections of vanes disposed closest to the centerline 35 (e.g., first radial sections 251) and the outer wall 202 (e.g., first radial sections 250) are angled to a lesser extent, if at all, relative to the second axial direction A2 compared to the sections of vanes disposed closer to or in contact with the intermediate wall 206 (e.g., second radial sections 252, 253). Such a configuration can increase the axial velocity of air 70 (FIG. 7) at the inner region 222B (FIG. 7) of the premixing chamber 222 (FIG. 7) and at the outer region 222A (FIG. 7), which can move flames aft of the outlet 224 (FIG. 7), and reduce flashback and flameholding. Additionally or alternatively, such a configuration can increase the tangential velocity of air 70 (FIG. 7) at the intermediate region 222C (FIG. 7), which can increase mixing of air 70 (FIG. 7) and fuel F (FIG. 7), which can reduce NOₓ emissions.

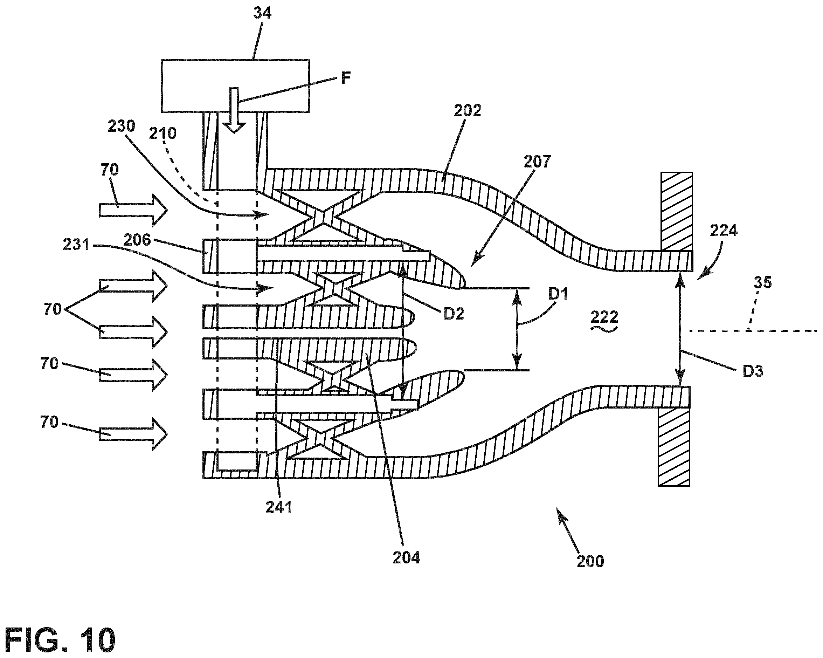

Referring to FIG. 10, the fuel passage 210 of the mixer 200 can be disposed partially or entirely upstream of the first set of vanes 230 and the second set of vanes 231, such as instead of extending between one or more pairs of the first set of vanes 230 as illustrated in FIG. 7. The fuel passage 210 can extend from the fuel source 34 at least partially through the outer wall 202, the intermediate wall 206, the inner wall 204, or combinations thereof.

The intermediate wall 206 includes an aft end 207 that extends toward, to, or into the premixing chamber 222. The aft end 207 can be angled radially inward (e.g., relative to the centerline 35) to provide at least a portion of the intermediate wall 206 with a conical configuration, which can increase the axial velocity of fluid (e.g., air 70) flowing within the intermediate wall 206, such as air 70 flowing through the second set of vanes 231 and the inner wall air passage 241, to reduce flashback and flameholding. Additionally or alternatively, the conical configuration can generate radially inward flow momentum away from the outer wall 202.

The aft end 207 includes a first inner dimension D1 (e.g., an inner diameter at an outlet of the aft end 207), the intermediate wall 206 includes a second inner dimension D2 (e.g., an inner diameter) upstream of the aft end 207, and the outlet 224 includes a third inner dimension D3 (e.g., an inner diameter). With some examples, a ratio of the first inner dimension D1 to the third inner dimension D3 is 0.2 to 3. Additionally or alternatively, a ratio of the second inner dimension D2 to the third inner dimension D3 is 0.3 to 3.5. Such configurations can provide higher axial fluid velocities at different radial locations, such as at the outer wall 202 and along the centerline 35, which can limit flashback and flameholding.

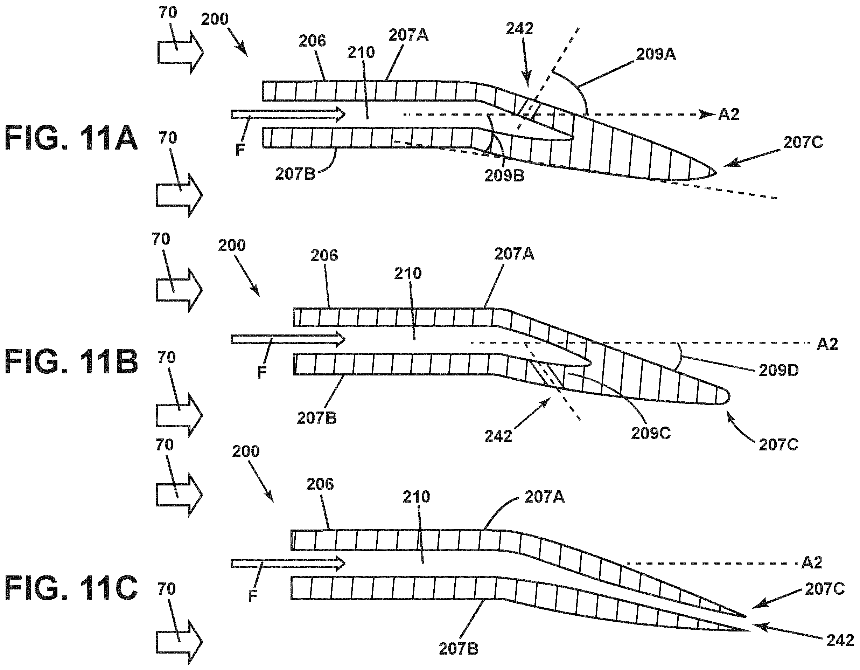

Referring to FIGS. 11A, 11B, and 11C, fuel orifices of the fuel nozzle assembly 48 (FIG. 7), such as the set of intermediate wall fuel orifices 242 of the mixer 200, can be arranged in one or more of a variety of configurations. For example, the set of intermediate wall fuel orifices 242 can be disposed at an outer radial surface 207A of the aft end 207 of the intermediate wall 206 (FIG. 11A), disposed at an inner radial surface 207B of the aft end 207 (FIG. 11B), disposed at a trailing edge 207C of the aft end 207 (FIG. 11C), or combinations thereof (e.g., with configurations in which the set of intermediate wall fuel orifices 242 includes a plurality of orifices). Providing the set of intermediate wall fuel orifices 242 at one or both of the outer radial surface 207A or the inner radial surface 207B can improve mixing of fuel F and air 70. The set of intermediate wall fuel orifices 242 can be fluidly coupled with the fuel passage 210. Air 70 can flow along the outer radial surface 207A, the inner radial surface 207B, or both.

Referring to FIG. 11A, fuel orifices of the set intermediate wall fuel orifices 242 disposed at the outer radial surface 207A can extend at an angle 209A relative to the second axial direction A2. With some examples, the angle 209A can be greater than or equal to 0 degrees (e.g., directly aft) and less than or equal to 90 degrees (e.g., directly radially outward). Smaller angles can limit fuel F at the outer wall 202 (FIG. 10) to limit flashback and flameholding. The inner radial surface 207B of the intermediate wall 206 can be disposed at an angle 209B relative to the second axial direction A2. With some examples, the angle 209B can be greater than 0 degrees and less than or equal to 60 degrees, which can converge fluid flow and increase higher fluid velocity at the centerline 35 (FIG. 10) to push recirculation aft.

Referring to FIG. 11B, fuel orifices of the set of intermediate wall fuel orifices 242 disposed at the inner radial surface 207B can extend at an angle 209C relative to the second axial direction A2. With some examples, the angle 209C can be greater than or equal to 0 degrees (e.g., directly aft) and less than or equal to 90 degrees (e.g., directly radially inward). Smaller angles can keep fuel F closer to the intermediate wall 206 in shear layer to promote mixing. Larger angles can increase penetration of fuel F. The outer radial surface 207A of the intermediate wall 206 can be disposed at an angle 209D relative to the second axial direction A2. With some examples, the angle 209D can be greater than or equal to 5 degrees and less than or equal to 60 degrees. Larger angles can increase flow acceleration at the centerline 35 (FIG. 10), pushing recirculation aft.

Referring to FIG. 11C, fuel orifices of the set of intermediate wall fuel orifices 242 disposed at the trailing edge 207C can be parallel with the outer radial surface 207A, the inner radial surface 207B, or neither, and can be circumferentially spaced from each other. The inner radial surface 207B can extend at the angle 209B (FIG. 11A) relative to the second axial direction A2.

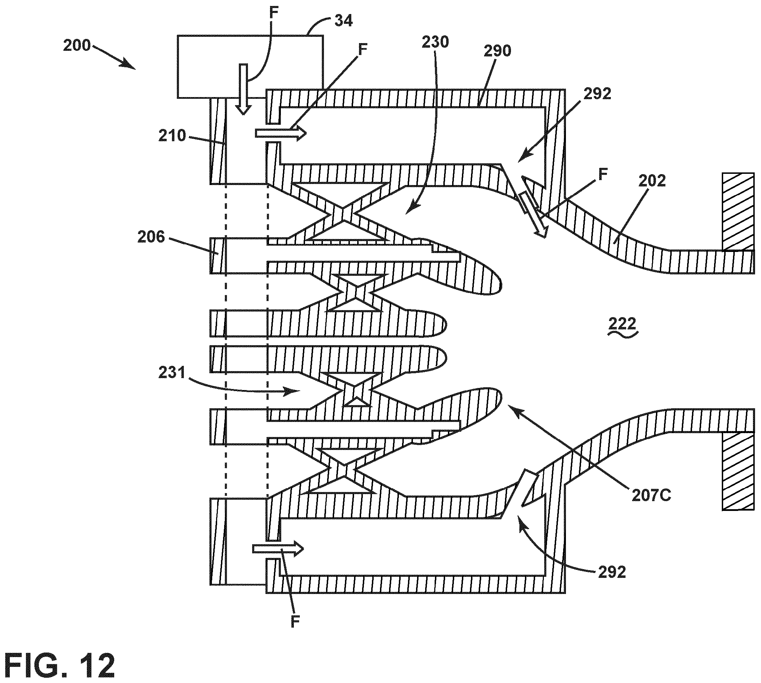

Referring to FIG. 12, the mixer 200 can include a fuel chamber 290 disposed at, at least partially defined by, or both, the outer wall 202. The outer wall 202 can include a second set of fuel orifices 292, fluidly coupling the fuel chamber 290 with the premixing chamber 222. The second set of fuel orifices 292 can include a single orifice (e.g., an annular orifice) or a plurality of discrete orifices extending through the outer wall 202 aft of the first set of vanes 230, aft of the second set of vanes 231, aft of the trailing edge 207C of the intermediate wall 206, or combinations thereof. The fuel passage 210 can be fluidly coupled with the fuel source 34 to provide fuel F. The fuel passage 210 can be disposed at least partially forward for the first set of vanes 230, the second set of vanes 231, of both. Additionally or alternatively, the fuel passage 210 can be disposed at least partially aft for the first set of vanes 230, the second set of vanes 231, of both.

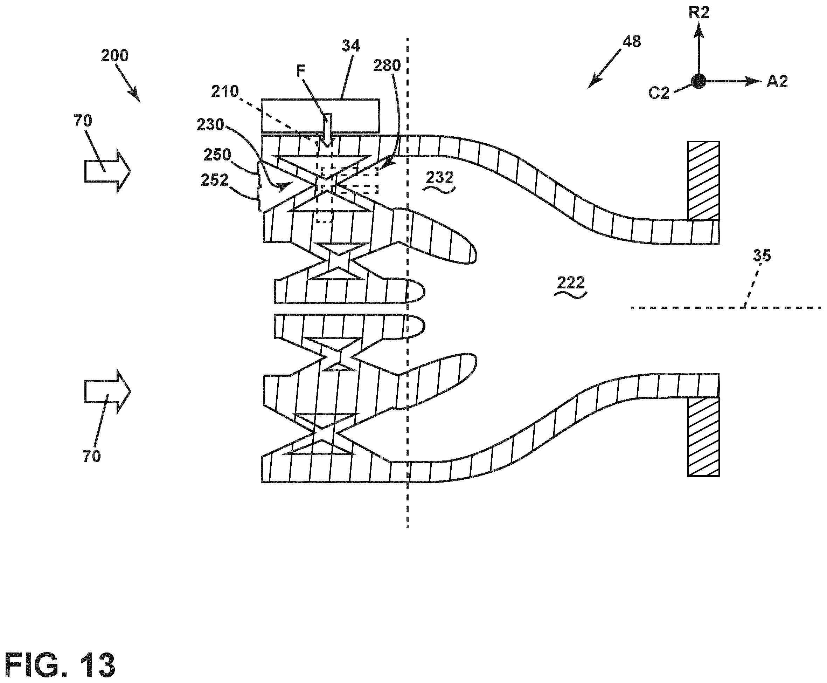

Referring to FIG. 13, the mixer 200 of the fuel nozzle assembly 48 can include a set of fuel posts 280 fluidly coupled with the fuel passage 210 and configured to emit fuel F from the fuel source 34 into the first annular space 232, the premixing chamber 222, or both. The fuel posts 280 can be separate from the first set of vanes 230, can extend from the first set of vanes 230, or can include fuel posts separate from the first set of vanes 230 and fuel posts extending from the first set of vanes 230. Some or all of the fuel posts 280 can be aligned with the second radial section 252 of the first set of vanes 230 (e.g., radially inward of the first radial section 250) such that the fuel F is emitted into air 70 with increased tangential velocity, which can provide uniform dispersal of fuel F in the second circumferential direction C2. The set of fuel posts 280 can be directed in the second axial direction A2, can have a tangential configuration (e.g., not perpendicular to the second circumferential direction C2), or combinations thereof. Some of the set of fuel posts 280 can be directed radially inward (e.g., relative to the centerline 35) and some of the set of fuel posts 280 can be directed radially outward to spread the fuel flow radially to improve mixing.

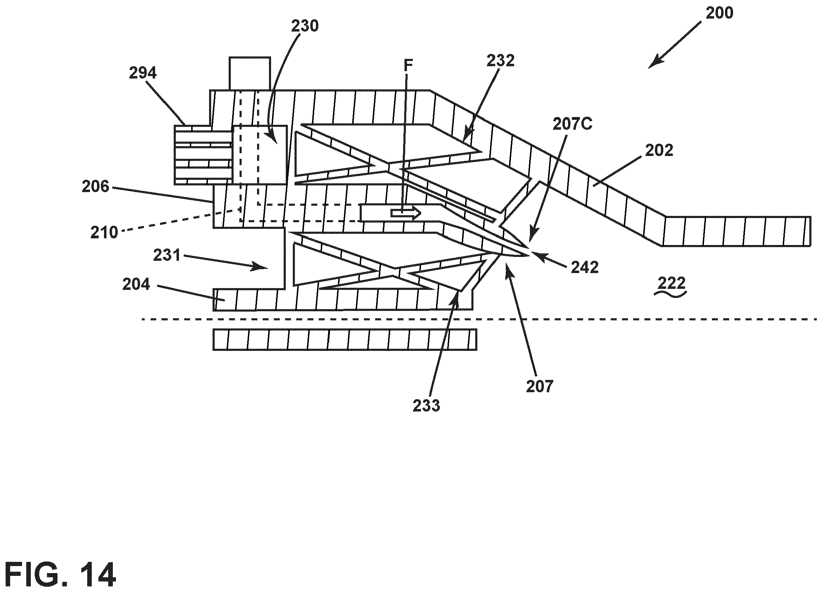

Referring to FIG. 14, the mixer 200 can include a perforated plate 294 upstream of the first set of vanes 230, the second set of vanes 231, or both. The perforated plate 294 can increase turbulence, reduce differential pressure across vanes, and increase penetration of fuel F through the premixing chamber 222.

The first set of vanes 230 can extend into a portion of the first annular space 232 between the outer wall 202 and the aft end 207 of the intermediate wall 206. Additionally or alternatively, the second set of vanes 231 can extend into a portion of the second annular space 233 between the aft end 207 and the inner wall 204. The set of intermediate wall fuel orifices 242 can be connected to the fuel passage 210 and can include at least one orifice extending through the trailing edge 207C of the aft end 207 such that fuel F is injected between turbulent flows from the first set of vanes 230 and the second set of vanes 231 to increase mixing.

In some examples, the same combustor 30 can include a combination of some or all of the different configurations of fuel nozzle assemblies 48. For example, the same combustor 30 can include a fuel nozzle assembly 48 having the mixer 100 and can include a second fuel nozzle assembly 48 having the mixer 200. The configurations of mixers 100, 200 are not mutually exclusive and can be combined in various manners.

To the extent not already described, the different features and structures of the various embodiments can be used in combination, or in substitution with each other as desired. That one feature is not illustrated in all of the embodiments is not meant to be construed that it cannot be so illustrated but is done for brevity of description. Thus, the various features of the different embodiments can be mixed and matched as desired to form new embodiments, whether or not the new embodiments are expressly described. All combinations or permutations of features described herein are covered by this disclosure.

This written description uses examples to describe aspects of the disclosure described herein, including the best mode, and also to enable any person skilled in the art to practice aspects of the disclosure, including making and using any devices or systems and performing any incorporated methods. The patentable scope of aspects of the disclosure is defined by the claims, and may include other examples that occur to those skilled in the art. Such other examples are intended to be within the scope of the claims if they have structural elements that do not differ from the literal language of the claims, or if they include equivalent structural elements with insubstantial differences from the literal languages of the claims.

Further aspects are provided by the subject matter of the following clauses:
A gas turbine engine, comprising: a compressor section, combustion section, and turbine section in serial flow arrangement, with the combustion section comprising: a combustor liner that at least partially defines a combustion chamber; and a gaseous fuel nozzle assembly fluidly coupled with the combustion chamber, the gaseous fuel nozzle assembly comprising a fuel-air mixer, a gaseous fuel passage fluidly coupled with the fuel-air mixer, and an air passage fluidly coupled with the fuel-air mixer; wherein the fuel-air mixer includes a plurality of vanes; wherein at least one vane of the plurality of vanes is disposed at least partially an angle relative to an axial direction; and wherein the angle varies in a radial direction.

The gas turbine engine of any preceding clause, wherein the angle is in a first range of 0 degrees to 40 degrees, inclusive of end points, for a first radial section of the plurality of vanes.

The gas turbine engine of any preceding clause, wherein the angle is in a second range of 40 degrees to 80 degrees, inclusive of end points, for a second radial section of the plurality of vanes.

The gas turbine engine of any preceding clause, wherein the angle is in a third range of 0 degrees to 40 degrees, inclusive of end points, for a third radial section of the plurality of vanes.

The gas turbine engine of any preceding clause, wherein the second radial section is disposed radially between the first radial section and the third radial section.

The gas turbine engine of any preceding clause, wherein the plurality of vanes is a first plurality of vanes, and the fuel-air mixer further comprises a second plurality of vanes disposed radially inward of the first plurality of vanes.

The gas turbine engine of any preceding clause, wherein the second plurality of vanes include a second vane first radial section and a second vane second radial section disposed at different angles relative to the axial direction.

The gas turbine engine of any preceding clause, wherein the fuel-air mixer includes an outer wall, an inner wall, and an intermediate wall disposed at least partially between the inner wall and the outer wall; wherein the first plurality of vanes extend from the intermediate wall to the outer wall; and wherein the second plurality of vanes extend from the intermediate wall to the inner wall.

The gas turbine engine of any preceding clause, wherein the intermediate wall includes an intermediate wall fuel orifice and an intermediate wall fuel passage fluidly coupled with the intermediate wall fuel orifice and the gaseous fuel passage.

The gas turbine engine of any preceding clause, wherein the intermediate wall includes a circular cross-sectional shape.

The gas turbine engine of any preceding clause, wherein the intermediate wall includes an elliptical cross-sectional shape.

The gas turbine engine of any preceding clause, wherein the intermediate wall includes a lobed cross-sectional shape.

The gas turbine engine of any preceding clause, wherein the intermediate wall includes an aft end, a first inner diameter at the aft end, and a second inner diameter upstream of the aft end; and the second inner diameter is larger than first inner diameter.

The gas turbine engine of any preceding clause, wherein the mixer includes an outlet having a third inner diameter.

The gas turbine engine of any preceding clause, wherein a first ratio of the first inner diameter to the third inner diameter is 0.2 to 3.

The gas turbine engine of any preceding clause, wherein a second ratio of the second inner diameter to the third inner diameter is 0.3 to 3.5.

The gas turbine engine of any preceding clause, wherein the fuel-air mixer includes an outer wall, a core region, and an intermediate region; and wherein the plurality of vanes is configured to facilitate increased fluid velocity in the axial direction adjacent the outer wall and in the core region, and are configured to facilitate increase fluid velocity in a tangential direction in the intermediate region.

The gas turbine engine of any preceding clause, wherein the plurality of vanes is a first plurality of vanes; wherein the fuel-air mixer further comprises a second plurality of vanes disposed radially inward of the first plurality of vanes; wherein the first plurality of vanes includes a first vane first radial section and a first vane second radial section radially inward of the first vane first radial section; wherein the second plurality of vanes include a second vane first radial section and a second vane second radial section disposed radially outward of the second vane first radial section; and wherein the angle at the first vane first radial section and the second vane first radial section is less than the angle at the first vane second radial section and the second vane second radial section to facilitate higher axial fluid velocity.

The gas turbine engine of any preceding clause, wherein the first vane second radial section and the second vane second radial section are configured to facilitate higher tangential fluid velocity compared to the first vane first radial section and the second vane first radial section.

The gas turbine engine of any preceding clause, wherein the fuel-air mixer includes a set of fuel posts.

The gas turbine engine of any preceding clause, wherein the set of fuel posts extend between adjacent vanes of the plurality of vanes.

The gas turbine engine of any preceding clause, wherein the set of fuel posts extend from the plurality of vanes.

The gas turbine engine of any preceding clause, wherein the fuel-air mixer includes a perforated plate upstream of at least some of the plurality of vanes.

A gaseous fuel nozzle assembly for a gas turbine engine, the gaseous fuel nozzle assembly comprising: a fuel-air mixer, a gaseous fuel conduit fluidly coupled with the fuel-air mixer, and an air passage fluidly coupled with the fuel-air mixer; wherein the fuel-air mixer includes a plurality of vanes each disposed at an angle relative to an axial direction; and wherein the angle varies in a radial direction.

The gaseous fuel nozzle assembly of any preceding clause, wherein the fuel-air mixer includes an inner wall and an outer wall with a converging configuration.

The gaseous fuel nozzle assembly of any preceding clause, wherein the fuel-air mixer includes an intermediate wall disposed at least partially between the inner wall and the outer wall.

The gaseous fuel nozzle assembly of any preceding clause, wherein the intermediate wall includes an aft end with a conical configuration.

The gaseous fuel nozzle assembly of any preceding clause, wherein the intermediate wall includes an outer radial surface, an inner radial surface, a trailing edge, and a set of intermediate wall fuel orifices.

The gaseous fuel nozzle assembly of any preceding clause, wherein the set of intermediate wall fuel orifices includes intermediate wall orifices at the outer surface.

The gaseous fuel nozzle assembly of any preceding clause, wherein the set of intermediate wall fuel orifices includes intermediate wall orifices at the inner surface.

The gaseous fuel nozzle assembly of any preceding clause, wherein the set of intermediate wall fuel orifices includes intermediate wall orifices at the trailing edge.

The gas turbine engine of any preceding clause, wherein the fuel-air mixer includes a fuel chamber.

The gas turbine engine of any preceding clause, wherein the fuel-air mixer includes an outer wall at least partially defining the fuel chamber and a premixing chamber.

The gas turbine engine of any preceding clause, wherein the outer wall includes a second set of fuel orifices fluidly coupling the fuel chamber with the premixing chamber.

The gas turbine engine of any preceding clause, wherein the second set of fuel orifices are aft of a trailing edge of the intermediate wall.

A fuel-air mixer, comprising a plurality of vanes each disposed at an angle relative to an axial direction; wherein the angle varies in a radial direction.

The fuel-air mixer of any preceding clause, wherein the plurality of vanes is a first plurality of vanes, and the fuel-air mixer includes a second plurality of vanes disposed radially inward of the first plurality of vanes.

The fuel-air mixer of any preceding clause, wherein the second plurality of vanes include a second vane first radial section and a second vane second radial section disposed at different angles relative to the axial direction.

The fuel-air mixer of any preceding clause, further comprising an outer wall, an inner wall, and an intermediate wall disposed at least partially between the inner wall and the outer wall; wherein the first plurality of vanes extends from the intermediate wall to the outer wall; and wherein the second plurality of vanes extend from the intermediate wall to the inner wall.

The fuel-air mixer of any preceding clause, wherein the intermediate wall includes an intermediate wall fuel orifice and an intermediate wall fuel passage fluidly coupled with the intermediate wall fuel orifice and the gaseous fuel passage.

The fuel-air mixer of any preceding clause, further comprising an outer wall, a core region, and an intermediate region; and wherein the plurality of vanes facilitates increased fluid velocity in the axial direction adjacent the outer wall and in the core region, and facilitate increase fluid velocity in a tangential direction in the intermediate region.

## Claims

1. A gas turbine engine (10), comprising:
a compressor section (12), a combustion section (14), and a turbine section (16) in serial flow arrangement, with the combustion section (14) comprising:
a combustor (30) liner that at least partially defines a combustion chamber (50); and
a gaseous fuel nozzle assembly (48) fluidly coupled with the combustion chamber (50), the gaseous fuel nozzle assembly (48) comprising a fuel-air mixer (100, 200), a gaseous fuel passage (110, 210) fluidly coupled with the fuel-air mixer (100, 200), and an air passage (112, 212) fluidly coupled with the fuel-air mixer (100, 200);
wherein the fuel-air mixer (100, 200) includes a plurality of vanes (130, 230, 231);
wherein at least one vane of the plurality of vanes (130, 230, 231) is disposed at least partially at an angle (160) relative to an axial direction; and
wherein the angle (160) varies in a radial direction.

2. The gas turbine engine (10) of claim 1, wherein the angle (160) is in a first range of 0 degrees to 40 degrees, inclusive of end points, for a first radial section (150, 250, 251) of the vanes (130, 230, 231).

3. The gas turbine engine (10) of claim 2, wherein the angle (160) is in a second range of 40 degrees to 80 degrees, inclusive of end points, for a second radial section (152, 252, 253) of the plurality of vanes (130, 230, 231).

4. The gas turbine engine (10) of claim 3, wherein the angle (160) is in a third range of 0 degrees to 40 degrees, inclusive of end points, for a third radial section (154) of the plurality of vanes (130).

5. The gas turbine engine (10) of claim 4, wherein the second radial section (152) is disposed radially between the first radial section (150) and the third radial section (154).

6. The gas turbine engine (10) of any preceding claim, wherein the plurality of vanes (130, 230, 231) is a first plurality of vanes (230), and the fuel-air mixer (200) further comprises a second plurality of vanes (231) disposed radially inward of the first plurality of vanes (230).

7. The gas turbine engine (10) of claim 6, wherein the second plurality of vanes (231) includes a second vane first radial section (251) and a second vane second radial section (253) disposed at different angles relative to the axial direction.

8. The gas turbine engine (10) of claim 7, wherein the fuel-air mixer (200) includes an outer wall (202), an inner wall (204), and an intermediate wall (206) disposed at least partially between the inner wall (204) and the outer wall (202);
wherein the first plurality of vanes (230) extends from the intermediate wall (206) to the outer wall (202); and
wherein the second plurality of vanes (231) extends from the intermediate wall (206) to the inner wall (204).

9. The gas turbine engine (10) of claim 8, wherein the intermediate wall (206) includes an intermediate wall fuel orifice (242) and an intermediate wall fuel passage (240) fluidly coupled with the intermediate wall fuel orifice (242) and the gaseous fuel passage (210).

10. The gas turbine engine (10) of any preceding claim, wherein the fuel-air mixer (100, 200) includes an outer wall (102, 202), a core region (122B, 222B), and an intermediate region (122C, 222C); and
wherein the plurality of vanes (130, 230, 231) is configured to facilitate increased fluid velocity in the axial direction adjacent the outer wall (102, 202) and in the core region (122B, 222B), and are configured to facilitate increased fluid velocity in a tangential direction in the intermediate region (122C, 222C).

11. The gas turbine engine (10) of any preceding claim, wherein the plurality of vanes (130, 230, 231) is a first plurality of vanes (230);
wherein the fuel-air mixer (200) further comprises a second plurality of vanes (231) disposed radially inward of the first plurality of vanes (230);
wherein the first plurality of vanes (230) includes a first vane first radial section (250) and a first vane second radial section (252) radially inward of the first vane first radial section (250);
wherein the second plurality of vanes (231) includes a second vane first radial section (251) and a second vane second radial section (253) disposed radially outward of the second vane first radial section (251); and
wherein the first vane first radial section (250) and the second vane first radial section (251) are angled relative to the axial direction less than the first vane second radial section (252) and the second vane second radial section (253) to facilitate higher axial fluid velocity.

12. The gas turbine engine (10) of claim 11, wherein the first vane second radial section (252) and the second vane second radial section (253) are configured to facilitate higher tangential fluid velocity compared to the first vane first radial section (250) and the second vane first radial section (251).

13. A gaseous fuel nozzle assembly (48) for a gas turbine engine (10), the gaseous fuel nozzle assembly (48) comprising:
a fuel-air mixer (100, 200),
a gaseous fuel conduit fluidly coupled with the fuel-air mixer (100, 200), and
an air passage (112, 212) fluidly coupled with the fuel-air mixer (100, 200);
wherein the fuel-air mixer (100, 200) includes a plurality of vanes (130, 230, 231) each disposed at an angle (160) relative to an axial direction; and
wherein the angle (160) varies in a radial direction.

14. The gaseous fuel nozzle assembly (48) of claim 13, wherein the fuel-air mixer (100, 200) includes an inner wall (104, 204) and an outer wall (102, 202) with a converging configuration.

15. The gaseous fuel nozzle assembly (48) of claim 14, wherein the fuel-air mixer (200) includes an intermediate wall (206) disposed at least partially between the inner wall (204) and the outer wall (202).
